Europäisches Patentamt

European Patent Office

Office européen des brevets

(11) Publication number: **0 312 409**
**A2**

## (12) EUROPEAN PATENT APPLICATION

(21) Application number: 88309706.5

(22) Date of filing: 17.10.88

(51) Int. Cl.⁴: **H 02 N 2/00**

(30) Priority: 15.10.87 JP 260186/87

(43) Date of publication of application:
19.04.89 Bulletin 89/16

(84) Designated Contracting States:
CH DE FR GB IT LI NL SE

(71) Applicant: HONDA ELECTRONIC CO., LTD.
20, Aza Oyamazuka Ohiwa-cho
Toyohashi-shi Aichi (JP)

(72) Inventor: Honda, Keisuke
62-1, Aza Shinsanbongi Sanbongi-cho
Toyohashi-shi Aichi-ken (JP)

(74) Representative: Gordon, Michael Vincent et al
GILL JENNINGS & EVERY 53-64 Chancery Lane
London WC2A 1HN (GB)

(54) Ultrasonic driving device.

(57) A stator consists of two metal blocks (13,14), two piezoelectric vibrators (16,17) and two electrodes (18,19) and the length of one metal block is very much longer than that of the other metal block (14). When alternating current voltage is applied to the piezoelectric vibrators of the stator, a linear progressive wave is generated on the end of the stator by compounding longitudinal vibration generated by the piezoelectric vibrators with bending vibration generated in the stator. A member is linearly or rotatively driven by one or more stators.

Fig. 5

## Description

### ULTRASONIC DRIVING DEVICE

The present invention relates to an ultrasonic driving device generating a linear progressive wave owing to a compound of a bending vibration of an end bending vibration with longitudinal vibration of an end portion of a stator.

In a known ultrasonic motor using a piezoelectric vibrator, two groups of electrodes are attached to one end of a ring type piezoelectric ceramic. The two groups of electrodes are so positioned that standing waves respectively generated by the two groups of electrodes are shifted every π/2 in each position. The parts of the ring type piezoelectric ceramics corresponding to the electrode are alternately polarized in reverse. Also, the two groups of electrodes are respectively connected to two oscillators for respectively generating alternating current voltages having π/2 phase shift relative to each other. When the alternating current voltages from the two oscillators are respectively applied to the two groups of electrodes, two standing waves having π/2 phase shift are each generated on the surfaces of the ring type piezoelectic ceramics and then progressive waves owing to a compound of the two standing waves are generated on the surfaces of the ring type piezoelectric ceramics. Therefore, when a rotary member is put on the ring type piezoelectric ceramics and the rotary member is strongly pressed against the ring type piezoelectric vibrator, the rotary member is rotated by the progressive waves.

In prior ultrasonic motors, the progressive wave is shifted to the circumferential direction of the ring type piezoelectric ceramics, but the progressive wave is not shifted linearly.

There is known an ultrasonic motor having a Langevin type vibrator comprising two metal blocks, two ring type piezoelectic vibrators, two electrodes between the two metal blocks and a bolt for fixing the two metal blocks, the two piezoelectric ceramics and electrodes. A twisting joint body is combined with one metal block with the bolt and a rotary member is pressed by a spring on the twisting joint body.

However, an ellipse vibration is generated in the circumferential direction on the twisting joint body in the above ultrasonic motor, but the ellipse vibration is not shifted linearly.

The inventor has discovered that an asymmetric Langevin type bolt-fixing vibrator generates a progressive wave on its end and side portions. This progressive wave is generated in the direction of the screw of the bolt for fixing a long metal block, a short metal block and two piezoelectric vibrators of an asymmetric Langevin type bolt-fixing vibrator, because of the longitudinal vibration of the piezoelectric vibrator, when AC voltage is applied to the piezoelectric vibrator.

A rotary member is rotated smoothly when the rotary member is pressed on the end or the side portions of the asymetric Langevin type bolt-fixing vibrator. Therefore the inventor has proposed an ultrasonic driving device with the asymmetric Langevin type bolt-fixing vibrator (see Japanese Patent Application No. 48517/87).

However, although the progressive wave is rotated on the end and side portions of the asymmetric Langevin type bolt-fixing vibrator, there is no generated progressive wave progressing diametrically to one direction.

It is, therefore, the primary object of the present invention to provide an ultrasonic driving device generating a progressive wave progressing to one direction on the end portions of a stator.

In order to accomplish the above and other object, the present invention comprises a stator fixing a long metal block, a short metal block, a ring type piezoelectric vibrator and electrodes as one body by engaging the screws of the long metal block and the short metal block with the screws of the both end of a bolt, a member to be driven composed on the one end portion of the stator, and a power supply for supplying alternative current voltage through the electrodes to the piezoelectrode vibrator, whereby progressive wave is generated on the both sides of the stator by compounding longitudinal vibration with bending vibration generated by the stator and drives the member.

In the drawings:-

Fig. 1 shows a sectional view of an ultrasonic motor in the prior art;

Fig. 2 shows a plan view of a form of a piezoelectric vibrator and a composition of electrodes of the piezoelectric vibrator in the ultrasonic motor in Fig. 1;

Fig. 3 shows a separated perspective view of the stator of another prior art ultrasonic motor;

Fig. 4 shows a side view having a partial sectional view of an ultrasonic motor in the proir art of Fig. 3;

Fig. 5 shows a side view of a stator of an ultrasonic driving device according to the present invention;

Fig. 6 shows a vibration wave generating in the stator in Fig. 5;

Fig. 7 shows the vibrational appearance of the stator in Fig. 5;

Fig. 8 shows a front view of one part of an ultrasonic driving device of the embodiment according to the present invention;

Fig. 9 shows a side view of the ultrasonic driving device in Fig. 8;

Fig. 10 shows a perspective view of an ultrasonic driving device in the other embodiment according to the present invention;

Fig. 11 shows a plan view of the ultrasonic driving device;

Fig. 12 shows a perspective view of an ultrasonic driving device of another embodiment of the present invention;

Fig. 13 shows a perspective view of an ultrasonic driving device of a still further embodiment of the invention; and,

Fig. 14 shows a side view of the ultrasonic driving device in Fig. 13.

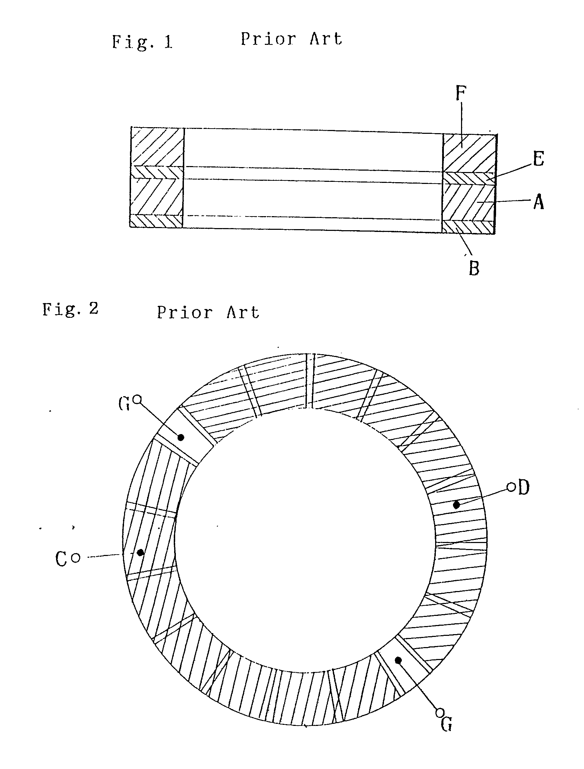

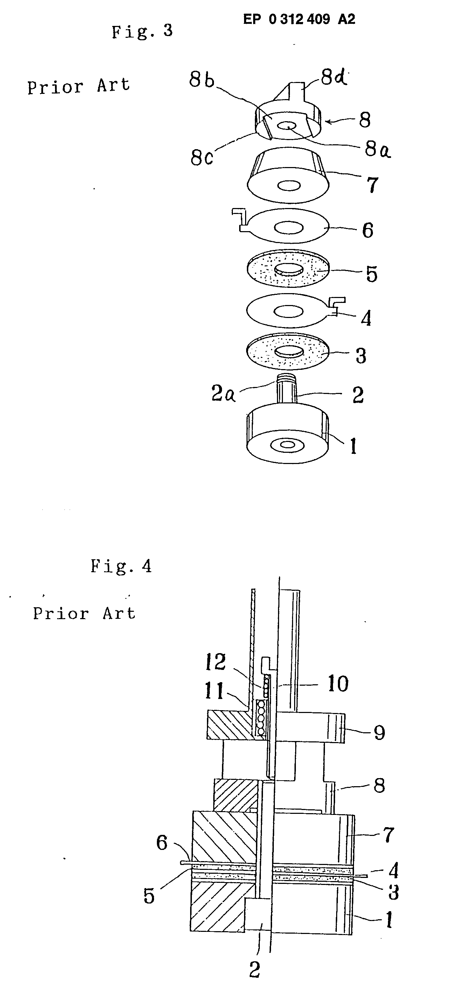

Referring to the prior art in Fig. 1, a ring type piezoelectric ceramic B is attached to a ring type resilient member A and the piezoelectric vibrator B vibrates with the resilient member A. The piezoelectric ceramic B is divided into 17 parts by the ratio of e.g. 22.5° or 11.25°. The respective neighbouring portions in the 17 parts of the piezoelectric vibrator B are polarized by the reverse polarity to each other as shown in Fig. 2. The two portions C and D in the one side of the piezoelectric vibrator B are respectively formed as electrodes by conductive paint as shown in Fig. 2. The portions G in Fig. 2 show earth electrodes. The member F to be driven, to which slider E is attached, is mounted on the resilient member A.

In the above ultrasonic motor of the prior art, an alternating current voltage of $V_0 \sin \omega t$ is applied to the one electrode C and an alternating current voltage $V_0 \cos \omega t$ is applied to the other electrode D, where $V_0$ is the instantaneous value, $\omega$ is radian frequency and t is time. The phases of these voltages are shifted by $\pi/2$ relative to each other. Thereby, the divided portions of the piezoelectric ceramic B alternately cause expansion and contraction and thus, in the resilient member A there arises bending vibration. Therefore, a standing wave is generated in the resilient member A and a progressive wave is generated on the resilient member A. Thus, the member F is rotated on the resilient member A with the progressive wave.

However, in the prior art ultrasonic motor, the progressive wave is rotated along by the ring resilient member, but is not shifted linearly.

Referring the prior art in Fig. 3, a piezoelectric vibrator 3, a terminal plate 4, a piezoelectric vibrator 5, a terminal plate 6 and an aluminium disk are put on a washer 1 and a bolt 2 is inserted through the centre holes of these members. The screw 2a of the bolt 2 is engaged with the screw hole 8a of a twisting joint body 8, arcuate projections 8c are formed on both sides of drain 8b and a beam 8d is so formed in the upper portion of the twisting joint body 8 that the beam 8d and drain 8b are at a predetermined angle.

In this prior ultrasonic driving device, when alternating current voltage is applied through the terminal plates 4 and 6 to the piezoelectric vibrators 3 and 5 and the piezoelectric vibrators 3 and 5 are vibrated in the direction of their thickness, the arcuate projections 8c of the twisting joint body 8 are pushed and twisted by the vibration of the piezoelectric vibrators 3 and 5. Therefore, the twisting joint body 8 is vibrated so as to be twisted as a wing of butterfly and when the excitation frequency of the alternating current voltage approaches a resonance frequency, elliptic vibration arises on the beam 8d of the twisting joint body 8.

Therefore, as shown in Fig. 4, a rotary member 9 is put on the twisting joint body 8, a centre bolt 10 passed through holes of a bearing 11 of the rotary member 9 is fixed to the twisting joint body 8, and a spring 12 is attached between the upper end of the bolt 10 and the bearing 11, whereby the rotary member 9 is strongly pressed against the beam 8d of the twisting joint body 8 and is rotated with the elliptic vibration of the beam 8d.

In the prior ultrasonic motor, however, no linear progressive wave is generated.

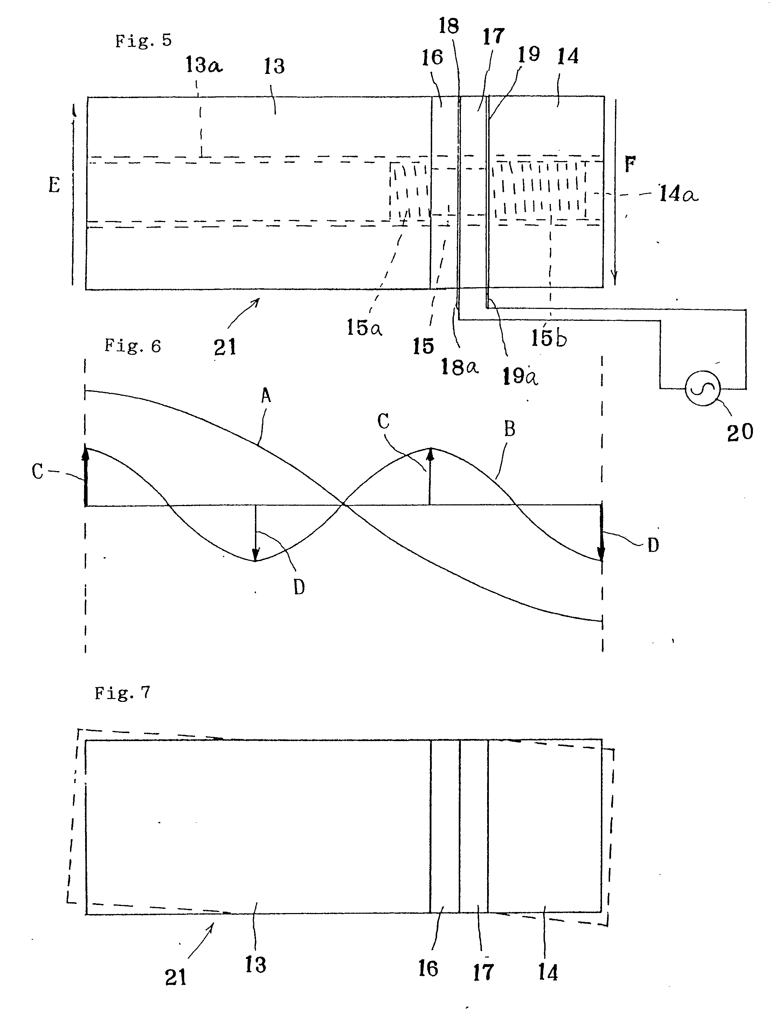

Referring to Fig. 5, in an ultrasonic driving device of the embodiment according to the present invention, screws 13a and 14a are formed in the one ends of a long metal block 13 and a short metal block 14 respectively. A bolt 15 is inserted into holes in two piezoelectric vibrators 16 and 17 and two electrodes 18 and 19 and the screws 15a and 15b of the ends of bolt 15 are engaged with the screws 13a and 14a. By these members, a stator 21 is composed. An alternating current supply 20 is connected to the terminals 18a and 19a of the electrodes 18 and 19.

When the alternating current voltage from the alternative current supply 20 is applied through the electrodes 18 and 19 to the piezoelectric vibrators 16 and 17, bending vibration having transformation toward arrows C and D arises in the side portions of the stator 21 as shown by the curve B in Fig. 6 to resonant vibration of a half wave of the whole length as shown by a curve A in Fig. 6. This bending vibration arises in the end portion of the stator as shown by dotted lines in Fig. 7. Therefore, progressive waves due to the compound of the longitudinal vibration in the piezoelectric vibrators 16 and 17 and the bending vibration in the stator 21 arise as shown by arrows E and F in Fig. 5.

This bending vibration naturally arises by adding vibration to a long bar. Therefore, the stator 21 is very much longer than the ultrasonic driving device presented by the inventor. In the ultrasonic driving device having the stator of the Langevin type vibrator, when the length of the long metal block is slightly longer than that of the short metal block, twist vibration due to the screw of the bolt arises on the end portions and side portion of the stator.

On the other hand, when the length of the long metal block 13 is longer than that of the short metal block 14 by about one time and a half or more, the progressive wave to one direction arises by compounding the longitudinal vibration with the bending vibration. This linear progressive wave generates to a determined direction when the alternating current voltage of the resonant frequency is applied from terminals 18a and 19a through the electrodes 18 and 19 to the piezoelectric vibrators 16 and 17. The direction of the progressive wave is decided due to a distance between the respective start portions of the screws of the bolt and the piezoelectric vibrators 16 and 17 and the shift from the centre of the piezoelectric vibrators 16 and 17.

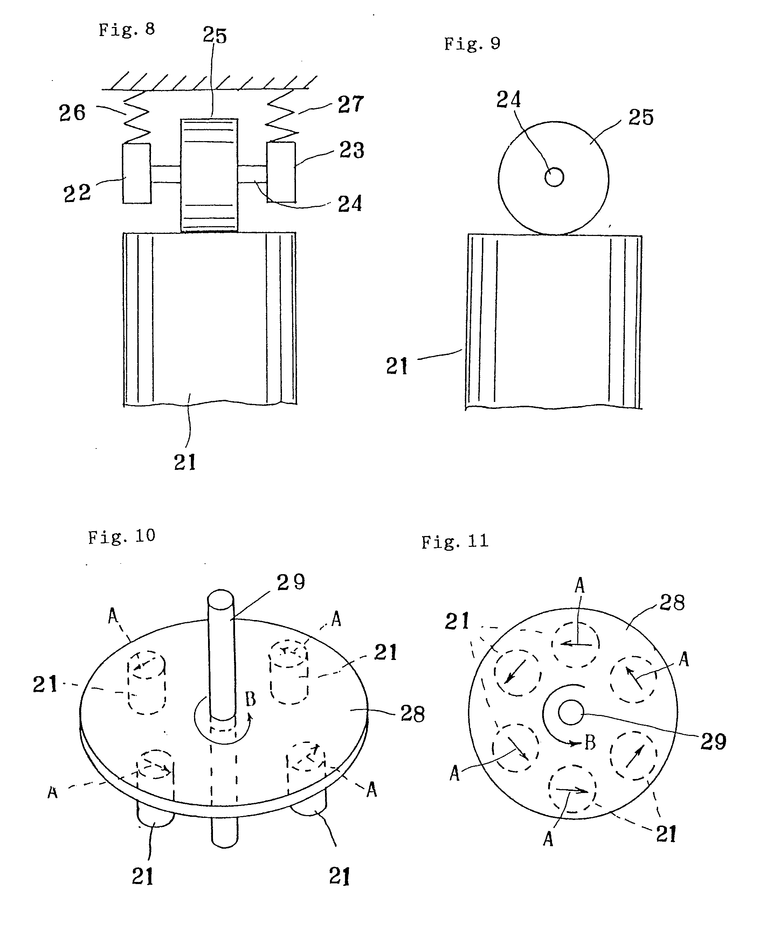

Referring to Figs. 8 and 9, a rotary member 25 attached to a rotary shaft 24, which is rotatably supported with bearings 22 and 23, is pressed on the end portion of the stator 21 by springs 26 and 27. Therefore, the rotary member 25 is rotated to one direction.

Referring to Fig. 10, in an ultrasonic driving device in another embodiment of the present invention, a rotary shaft 29 of a disk 28 is rotatably supported with bearings. Four stators 21 are pressed against one side of the disk 28. When alternating current voltage is applied to the four stators 21, the stators 21 respectively generate linear progressive waves in the rotary direction of the disk 28 as shown by arrows A in Fig. 10. Therefore, the disk 28, is rotated as shown by an arrow B.

In Fig. 11, the disk 28, the rotary shaft 29 of which is supported with bearings, is rotated by six stators 21.

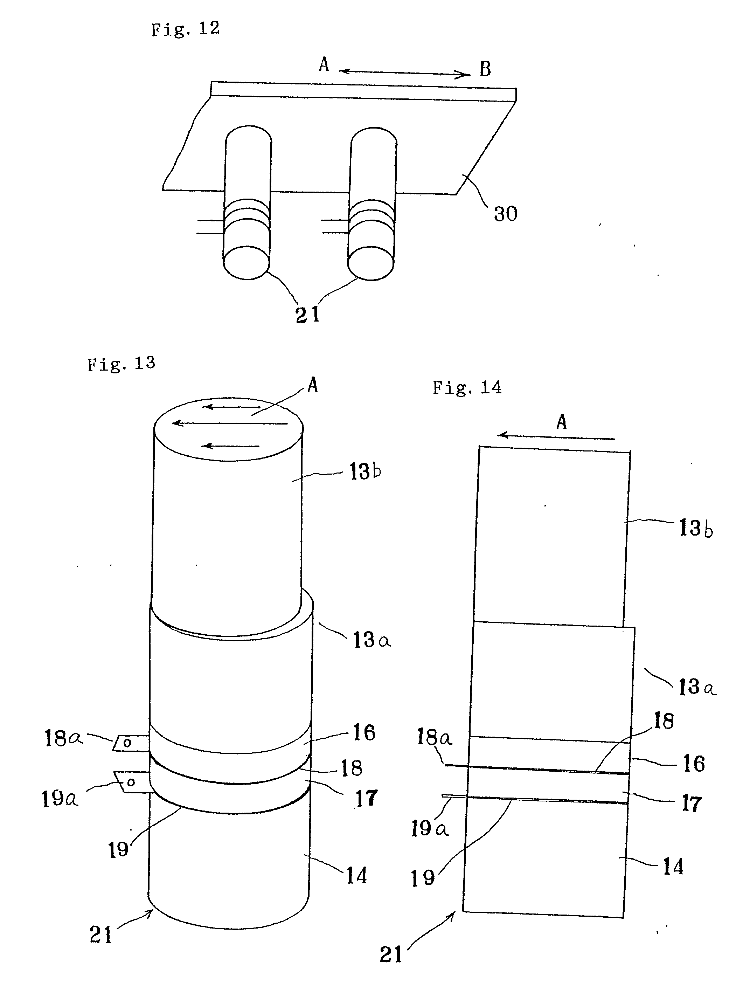

Referring to Fig. 12, in an ultrasonic driving device in a further embodiment of the invention, a plate member 30 to be driven is supported by roller bearings to be driven linearly and two stators 21 are pressed under the surface of the plate member 30.

When the alternating current voltage is applied to the two stators 21, the plate member 30 is driven in the directions of the arrows A or B with the progressive wave of the respective stator 21.

In a still further embodiment of the invention, three or four stators 21 are attached to the bottom portion of a member to be driven, the directions of the progressive waves of the three or four stators 21 are made coincident and the respective end surfaces of the three or four stators 21 are put on a plane floor. When the alternating current voltage is applied to the respective piezoelectric vibrators 16 and 17 of the three or four stators 21, the member is linearly driven on the plane floor by the progressive wave on the end surfaces of the three or four stators 21.

When a plurality of stators are pressed on one or more wheels or the drive shaft of a vehicle by springs and an alternating current voltage is applied to the piezoelectric vibrators of the stators, the vehicle is driven by rotating these wheels.

Referring to Figs. 13 and 14, in a stator of a further embodiment of the present invention, the piezoelectric vibrators 16 and 17 and the electrodes 18 and 19 having the terminal 18a and 19a are put between two metal blocks 13a and 14 which are fixed with a bolt. The length of the metal block 13a is same as that of the metal block 14 or is slightly longer. The metal block 13b is formed with a diameter slightly smaller than that of the metal block 13a and the centre of the metal block 13b is slightly shifted from the centre of the metal block 13a. The metal block 13b is formed with the metal block 13a by shaving a long metal block, or the other metal block 13b is attached on the end surface of the metal block 13a.

When the alternating current voltage is applied to the piezoelectric vibrators 16 and 17 of the above stator 21, the linear progressive wave is generated on the end surface of the metal block 13b as shown by arrows A. The above stator may be used to drive a member in the same way as the previous examples.

## Claims

1. An ultrasonic driving device comprising a stator having a long metal block (13), a short metal (14), a ring type piezoelectric vibrator (16,17) and electrodes (18,19) held as one body by engaging screws (13a,14a) of the long metal block and the short metal block with the screws of both ends of a bolt (15); a member to be driven disposed on one end portion of the stator; and a power supply (20) for supplying alternating current voltage through the electrodes to the piezoelectric vibrator, whereby a progressive wave is generated on both sides of the stator, by a compound of longitudinal vibration generated by the piezoelectric vibrators with bending vibration generated in the stator, for driving the member.

2. A device as set forth in claim 1 wherein the long metal block is at least $2\frac{1}{2}$ times the length of the short metal block.

3. A device as set forth in claim 1 or claim 2, wherein the long metal block is composed of two metal blocks having different diameters.

4. A device as set forth in claim 3, wherein the one metal block having the smaller diameter is attached to the other metal block with its longitudinal centreline offset from that of the other block.

5. A device as set forth in claim 3, wherein the one metal block having the smaller diameter and the other metal block are formed by shaving one long metal block.

6. A device as set forth in claim 1, wherein the member is driven by a plurality of stators.

7. A device as set forth in claim 1, wherein the member is linearly driven by a plurality of stators.

Fig. 1    Prior Art

F

E

A

B

Fig. 2    Prior Art

G

D

C

G

Fig. 3

Prior Art

8b    8d

8c    8    8a

7

6

5

4

3

2a    2

1

Fig. 4

Prior Art

12
11    10

9

8

7

6
5    4
3
1

2

Fig. 5

Fig. 6

Fig. 7

EP 0 312 409 A2

Fig. 8

Fig. 9

Fig. 10

Fig. 11

Fig. 12

Fig. 13

Fig. 14